# EUROPÄISCHE PATENTSCHRIFT

(11) **EP 0 522 375 B1**
(45) Veröffentlichungstag und Bekanntmachung des Hinweises auf die Patenterteilung: **23.08.1995**
(21) Anmeldenummer: 92110855.1
(22) Anmeldetag: 26.06.1992
(51) Int. Cl.: C08F 8/04, C08F 8/06

(54) **Gesättigte, flüssige, durch spezielle Gruppen endfunktionalisierte Isobutylenpolymere, ein Verfahren zu ihrer Herstellung sowie deren Verwendung zur Herstellung von niedrigviskosen Kautschukmischungen**
Saturated, liquid isobutylene polymers, end-functionlized with special groups, a process for their preparation and their use for the preparation of caoutchouc-mixtures having a low viscosity
Polymères d'isobutylène saturés, liquides, fonctionalisés en bout de chaîne par des groupes spéciaux, procédé de leur préparation ainsi que leur utilisation pour la préparation de mixtures-caoutchouc ayant une faible viscosité

(30) Priorität: 09.07.1991 DE 4122655
(43) Veröffentlichungstag der Anmeldung: 13.01.1993
(73) Patentinhaber: BAYER AG, 51368 Leverkusen (DE)
(72) Erfinder: Weider, Richard, Dr., W-5090 Leverkusen 3 (DE); Scholl, Thomas, Dr., W-5060 Bergisch Gladbach 2 (DE)

(56) Entgegenhaltungen:
- EP-A- 0 382 405
- DE-A- 1 520 311
- FR-A- 1 497 289
- GB-A- 1 170 097
- US-A- 4 358 566

## Beschreibung

Die Erfindung betrifft ein Verfahren zur Herstellung von gesättigten flüssigen, durch spezielle Gruppen endfunktionalisierte Isobutylenpolymeren mit niedrigem Molekulargewicht und niedriger Viskosität neue endfunktionalisierte Isobutylenpolymere sowie deren Verwendung zur Herstellung von z.B. niedrigviskosen Kautschukmischungen.

Endständig funktionalisierte, flüssige Isobutylenpolymere sind bereits bekannt. In der US-Patentschrift 3 427 351 wird die Herstellung eines gesättigten Carboxylterminiertem Isobutylenpolymeren durch oxidative Spaltung der durch Ozonolyse von Isobutylen-Dien-Copolymeren erhaltenen Ozonide beschrieben.

Diese über oxidative Spaltung der primär entstehenden Ozonolyseprodukte gewonnenen Polymere mit -COOH-Gruppen bieten nur eine beschränkte Palette an Vernetzungsagenzien, da sie nur mit Epoxiden oder Salzen vernetzbar sind. Die Verwendung anderer Härter, z.B. zur schnelleren Aushärtung, ist nicht möglich.

Die Umwandlung der durch Ozonbehandlung von geeigneten Olefin-Dien-Copolymeren erhaltenen Produkte mit Hydrazin oder Hydroxylamin zu Hydrazonen oder Oximen, die zur Härtung mit Epoxyharzen geeignet sind, wird in der DE-OS 2 147 874 beschrieben.

Die Umsetzungsprodukte enthalten eine hydrolytisch und oxidativ sehr empfindliche -C=N-N- oder -C=N-O- Gruppierung (s. z.B. Houben-Weyl, Methoden der organischen Chemie, Bd. 6/3 und 7/1), was ihre Verwendung stark einschränkt.

In EP 0 012 316 wird eine Arbeitsweise zur Herstellung von gesättigten Carboxyl- oder Hydroxyendgruppen enthaltenden Polymeren durch Ozonisierung eines ein Dien enthaltenden Olefincopolymeren in einem speziellen Lösungsmittelgemisch und anschließender Spaltung der Ozonide durch Oxidation zu Carboxyl- und/oder Reduktion mittels komplexer Hydride zu Hydroxylgruppen beschrieben.

Die Verwendung von komplexen Hydriden zur Reduktion der nach der Ozonbehandlung entstehenden Produkte, wie sie in obiger Patentschrift (EP 0 012 316) erwähnt wird, ist zur Gewinnung größerer Mengen, wie sie für die technische Anwendung solcher reaktiven Polymere benötigt werden, nicht übertragbar. Die komplexen Hydride sind, wie jedem Fachmann bekannt, sehr hydrolysemepfindlich und zum Teil selbstentzündlich mit Wasser, was ihre Verwendung im größeren Maßstab wegen des Sicherheitsrisikos stark einschränkt. Bei Verwendung von äquivalenten Mengen solcher Reduktionsmittel entstehen außerdem durch Salzbildung nach kurzer Zeit ein festes, unrührbares Gel (siehe z.B. Journal of Polymer Science, A2 (1964), S. 5316), das sich erst nach weiterer, wegen der Nichtrührbarkeit des Gels risikoreichen Zugabe eines sehr großen Überschusses (s. Beispiel 22 obiger Patentschrift) an Reduktionsmittel wieder löst. Der Überschuß muß nach beendeter Reduktion unter heiliger Wasserstoffentwicklung vernichtet und die Lösung des Polymeren noch durch Waschen von Salzen befreit und getrocknet werden. Insgesamt ist eine solche Verfahrensweise nicht in technischem Maßstab durchführbar.

Gegenstand der Erfindung ist daher ein Verfahren zur Herstellung von flüssigen, gesättigten Polymeren der Struktur 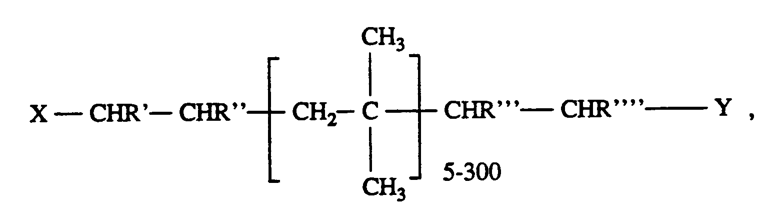
worin
R', R'', R''' und R'''' für Wasserstoff oder eine C₁-C₃-Alkylgruppe stehen und mindestens zwei der Reste Wasserstoff bedeuten, mit einem Molekulargewicht Mₙ von 300 bis 10 000, bevorzugt 500 bis 5 000, und im wesentlichen an den Enden der Polymerkette befindlichen Gruppen X und Y der Bedeutung OH, SH, NR¹R², N=C=O oder N=C(R²)₂, wobei X=Y gilt und die Anzahl der Gruppen X+Y pro Polymer 1,8 bis 2,5 beträgt,
durch Ozonolyse eines hochmolekularen, 0,5 bis 15 Mol-% eines Dienmonomeren enthaltenden Isobutylen-Dien-Copolymeren in Lösung, das dadurch gekennzeichnet ist, daß die nach der Ozonbehandlung entstehenden Produkte durch Zugabe von Peroxidzersetzern stabilisiert werden und durch Reduktion mittels Wasserstoff in Anwesenheit von Hydrierkatalysatoren unter Drücken von 10 bis 300 bar und Temperaturen von 20 bis 300°C gegebenenfalls in Gegenwart von Schwefel oder Aminen der Struktur NHR¹R², gespalten werden und, sofern es sich bei dem Amin um Ammoniak handelt, die entstandenen NH₂-Gruppen gegebenenfalls anschließend durch Umsetzung mit Phosgen oder mit Ketonen oder Aldehyden in die Gruppen N=C=O oder N=C(R²)₂ umgewandelt werden,
wobei
- R¹: für Wasserstoff oder einen gegebenenfalls substituierten aliphatischen, cycloaliphatischen oder aromatischen, gegebenenfalls Hydroxyl- oder Amingruppen tragenden C₁- bis C₁₆-Kohlenwasserstoffrest und
- R²: für Wasserstoff oder einen gegebenenfalls substituierten aliphatischen, cycloaliphatischen oder aromatischen C₁ bis C₁₆-Kohlenwasserstoffrest stehen.

Das erfindungsgemäße Verfahren wird an einem hochmolekularen, festen Polymerisat durchgeführt, welches durch Copolymerisation von Isobutylen mit 0,5 bis 15 Mol-%, bevorzugt konjugierte Diene, wie Butadien, Isopren, 2-Chlorbutadien-(1,4), 2-Brom-butadien-(1,4), Pentadien, Hexadien, 2-Ethylbutadien-(1,3), 2-Propylbutadien-(1,3), 2-Phenylbutadien-(1,3), 2,3-Dimethylbutadien-(1,3), 2-Methylpentadien-(1,3) oder 3-Propoxyhexadien-(1,3) erhältlich und z.B. unter der Bezeichnung Butylkautschuk kommerziell verfügbar ist. Besonders bevorzugt ist Isopren als Dienmonomer. Die Diene liegen dabei im wesentlichen in der 1,4-Position verknüpft vor. Geringe Anteile 1,2-Verknüpfung, wie sie in allen kommerziell erhältlichen Butylkautschuken vorhanden ist und die sich nicht vollständig unterdrücken läßt, führen zu ebenfalls geringen Anteilen seitenständiger funktioneller Gruppen und damit zu solchen Polymeren mit mehr als 2 funktionellen Gruppen pro Polymerkette.

Die erfindungsgemäß erhaltenen Polymere enthalten ca 1,8 bis 2,5, bevorzugt 1,8 bis 2,2, funktionelle Gruppen pro Polymerkette.

Das beim erfindungsgemäßen Verfahren eingesetzte Ausgangspolymerisat hat eine Mooney-Viskosität (ML 1+8, 125°C) von ca. 30 bis 80, bevorzugt 40-70, und Molekulargewichte Mₙ von mindestens 80 000. Wesentlich geringere Molgewichte führen zu Produkten mit weniger als 1,8 funktionellen Gruppen pro Polymerkette. Das Molekulargewicht kann aber in weiten Grenzen variieren und reicht bevorzugt von Mₙ 100 000 bis 1 000 000.

Die endständigen funktionellen Gruppen OH, SH, NR¹R², N=C=O oder -N=C(R²)₂ der nach dem erfindungsgemäßen Verfahren erhaltenen Polymere sind je nach Natur des Dienmonomeren im Ausgangspolymerisat an primäre und/oder sekundäre Kohlenstoffatome gebunden. Bei dem bevorzugten Dienmonomer Isopren liegen z.B. die endständigen funktionellen Gruppen in den erfindungsgemäßen Polymeren im Verhältnis 1:1 als Strukturen der Formeln -CH₂-CH₂-X und CH₂-CH(CH₃)-X vor, wobei X für die jeweilige funktionelle Gruppe steht.

Bei dem erfindungsgemäßen Verfahren wird das hochmolekulare Isobutylen-Dien-Copolymere in üblicher Weise einer Ozon enthaltenden gasförmigen Strömung ozonisiert, die in einem üblichen Ozongenerator aus reinem Sauerstoff oder einem Sauerstoff enthaltenden trockenen Gasgemisch, wie Luft, erzeugt wird. Der Ozongehalt des Gasstromes beträgt bis zu 15 Vol%, bevorzugt 0,5 bis 10 Vol-%. Zur Ozonolyse wird das Copolymere in einem organischen Lösungsmittel, vorzugsweise einem gesättigten, gegebenenfalls halogenierten aliphatischen oder cycloaliphatischen Kohlenwasserstoff oder Ether gelöst. Geeignete Lösungsmittel sind z.B. Pentan, Hexan, Cyclohexan, Leichtbenzine, Petrolether, Tetrahydrofuran, Methylenchlorid, Chloroform, Tetrachlormethan, Tetrachlorethan oder Gemische daraus. Die Konzentration des Copolymeren im Lösungsmittel wird so gewählt, daß die Viskosität der Lösung zur Dispersion des Ozon führenden Gases geeignet ist. Bevorzugt liegt sie bei 5 bis 30 Gew.-%.

Die Ozonolyse wird im Temperaturbereich von -20 bis 100°C, bevorzugt -10 bis 25°C, durchgeführt.

Die Ozonmenge ergibt sich aus dem Grad der Ungesättigtheit im Copolymeren und dem gewünschten Ausmaß des Abbaus, wobei pro Mol Doppelbindungen im Copolymer ein Mol Ozon zur vollständigen Spaltung verbraucht wird. Ein unerwünschter Überschuß an Ozon bei dem erfindungsgemäßen Verfahren läßt sich in der Praxis durch Bestimmung der Säurezahl, die erst nach Verbrauch aller Doppelbindungen anwächst, vermeiden.

Nach erfolgter Ozonolyse wird das entstandene Produkt stabilisiert, um eine unerwünschte Oxidation durch gebildete Peroxide zu verhindern. Als stabilisierende Mittel werden Peroxidzersetzer verwendet, wie sie z.B. in Houben-Weyl, Methoden der organischen Chemie, Band 8, S. 63 f, beschrieben sind. Besonders bevorzugt sind wäßrige Lösungen von Natriumborhydrid oder Formaldehyd oder eine wäßrig-alkoholische Natriumhydridlösung. Eine ebenfalls mögliche Stabilisierung durch druckloses Einleiten von Wasserstoff in die mit geringen Mengen eines Hydrierkatalysators versetzte Ozonolyselösung ist dagegen in technischem Maßstab wegen der erhöhten Explosionsgefahr der entstehenden Ozon- bzw. Sauerstoff-Wasserstoffgemische nicht durchführbar. Die Menge an Peroxidzersetzern beträgt 1 bis 4, bevorzugt 1-2 mol pro mol eingeleitetes Ozon.

In einem sich anschließenden Verfahrensschritt wird gegebenenfalls in Gegenwart von Schwefel oder primären Aminen reduziert. Der Schwefel oder die Amine können dabei vor oder zusammen mit dem Hydrierkatalysator oder bereits vor der Stabilisierung zugegeben werden. Es eignen sich für das erfindungsgemäße Verfahren elementare Schwefel oder Schwefelwasserstoff oder Ammoniak sowie primäre aliphatische, cycloaliphatische oder aromatische Amine, wie Methylamin, Ethylamin, Propylamin, Isopropylamin, Butylamin, sec.-Butylamin, Isobutylamin, tert-Butylamin, Hexylamin, 2-Ethyl-hexylamin und Cyclohexylamin, oder Anilin sowie primäre, aliphatische, cycloaliphatische oder aromatische hydroxy- oder aminsubstituierte Amine, wie 2-Aminoethanol, 2-(2-Aminoethylamino)-ethanol, 3-Amino-1-propanol, 1-Amino-2-propanol, Ethylendiamin, Diethylentriamin, 1-Amio-2-diethylaminoethan, 1,2-Diaminopropan, Hexamethylendiamin, 1,4-Diaminocyclohexan, 5-Amino-1-aminoethyl-1,3,3-trimethylcyclohexan, Bis-(4-amino-cyclohexyl)-methan, Phenyldiamin, 4-Amino-diphenylamin, 2,4-Diamino-1-methylbenzol oder Bis-(4-amino-phenyl)-methan.

Besonders bevorzugt ist Ammoniak und die Verfahrensweise ohne Verwendung von Schwefel oder Aminen. Ohne Verwendung von Schwefel oder Aminen entstehen die Polymere mit OH-Gruppen.

Die Menge des zugegebenen Schwefels, Schwefelwasserstoffs oder der Amine betragt ca. 10 bis 200, bevorzugt 50-100 mol pro mol eigeleitetem Ozon.

Als Reduktionsmittel wird Wasserstoff in Gegenwart von an sich bekannten Hydrierkatalysatoren wie Palladium, Platin, Platinkohle, Raney-Nickel oder Kupferchromit verwendet. Die Katalysatoren können dabei sowohl in freier Form als auch auf einem üblichen Trägermaterial eingesetzt werden. Bevorzugte Hydrierkatalysatoren sind Raney-Nickel, Kupferchromit und Platin Katalysatoren. Bei Zusatz von Schwefel können nur schwefelaktive Hydrierkatalysatoren, z.B. Sulfide oder Polysulfide der Nebengruppen metalle, z.B. des Kobalts, Nickels, Eisens oder Molybdäns, verwendet werden. Die Katalysatormenge beträgt dabei ca. 10 bis 100 g, bevorzugt 30-70 g pro kg Polymer.

Das Lösemittel kann bei der Reduktion, außer im Fall von halogenierten Lösemitteln, das gleiche wie das bei der Ozonolyse verwendete sein. Vorteilhaft werden jedoch polare Lösemittel wie Tetrahydrofuran und/oder Dioxan verwendet. Auf das Lösungsmittel kann aber auch verzichtet werden.

Nach der Zugabe des Hydrierkatalysators wird vorzugsweise bei Drücken von 100 und 300 bar und Temperaturen von 50 bis 200°C gegebenenfalls in Gegenwart des Schwefels oder des Amins hydriert.

Der Fortschritt der Reduktion kann z.B. durch Beurteilung der Intensität der Bande bei 1720 cm⁻¹ im Infrarotspektrum verfolgt werden, die bei vollständigem Umsatz verschwindet.

Die bei der Verwendung von Ammoniak als Amin entstehenden Polymere mit NH₂-Gruppen können gegebenenfalls im Anschluß an die Reduktion nach an sich bekannten Verfahren (siehe Houben-Weyl, Methoden der organischen Chemie, Band 8, S. 199 ff und Chemical Reviews 63 (1963) S.489 ff) z.B. durch Umsetzung mit Phosgen zu den Gruppen N=C=O oder durch Umsetzung mit Ketonen oder Aldehyden der Struktur O=C(R²)₂ zu den Gruppen N=C(R²)₂ umgewandelt werden.

Ein weiterer Gegenstand der Erfindung sind nach dem erfindungsgemäßen Verfahren herstellbare flüssige, gesättigte Polymere der Struktur 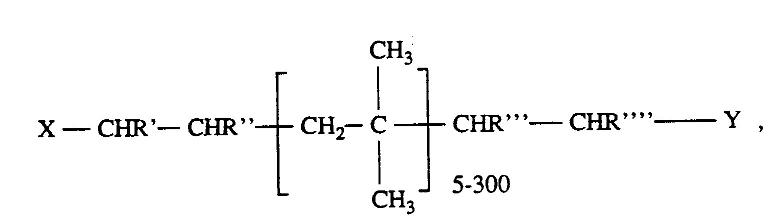
worin
R', R'', R''' und R'''' für Wasserstoff oder eine C₁-C₃-Alkylgruppe stehen und mindestens zwei der Reste Wasserstoff bedeuten,
mit einem Molekulargewicht Mₙ von 300 bis 10 000 und im wesentlichen an den Enden der Polymerkette befindlichen Gruppen X und Y der Bedeutung SH, NR¹R², N=C=O oder -N=C(R²)₂, wobei X=Y gilt und die Anzahl der Gruppen X+Y pro Mol Polymer 1,8 bis 2,5 beträgt,
und
- R¹: für Wasserstoff oder einen gegebenenfalls substituierten aliphatischen, cycloaliphatischen oder aromatischen, gegebenenfalls Hydroxyl- oder Amingruppen tragenden C₁- bis C₁₆-Kohlenwasserstoffrest und
- R²: für Wasserstoff oder einen gegebenenfalls substituierten aliphatischen, cycloaliphatischen oder aromatischen C₁- bis C₁₆-Kohlenwasserstoffrest stehen.

Bevorzugt sind solche Polymere, die 1,8 bis 2,2 Mol Gruppen der Struktur SH, NHR¹ oder N=C=O pro Mol Polymer enthalten und wo sich die Gruppen an den Enden der Polymerkette befinden.

Die nach dem erfindungsgemäßen Verfahren hergestellen flüssigen Polymere eignen sich insbesondere zur Herstellung von niedrigviskosen, mit Ruß oder anderen bekannten Füllstoffen gefüllten, mit polyfunktionellen Vernetzungsmitteln über die reaktiven Endgruppen vulkanisierbaren Kautschukmischungen. Die Mooney-Vikosität der Kautschukmischungen ist von der Füllstoffart und-menge abhängig. Sie liegt bevorzugt unterhalb von 50 (ML 4, 125°C).

Diese Kautschukmischungen sind wegen ihrer sehr guten Fließfähigkeit besonders zur Herstellung von sehr dünnwandigen oder kompliziert geformten Gummiartikeln im Gieß-, Spritzguß-, RIM- oder Extrusionsverfahren durch Vulkanisation mit polyfunktionellen Vernetzungsmitteln geeignet. Sie erlauben außerdem durch ihre geringe Viskosität die lösungsmittelfreie Beschichtung von Geweben. Dem Gummiartikeln werden dabei die Eigenschatten des Butylkautschuks wie hohe Wetterstabilität und Oxidatiorsresistenz sowie geringe Permeabilität für Gase verliehen. Die Wahl der Vernetzungsmittel richtet sich nach den vorhandenen Endgruppen in den flüssigen Kautschuken und nach der gewünschten Vulkanisationsgeschwindigkeit. Die gewünschten Eigenschaften und die Vernetzungskinetik lassen sich dabei in weiten Grenzem variieren. Für die Endgruppen -OH, -NR¹R² und -N=C(R²)₂ eignen sich z.B. Polyisocyanate, für die Endgruppen -OH, -NR¹R² und -SH Polyexpoxide und für die Endgruppe -N=C=O Polyhydroxyverbindungen und Polyamine. Die erfindungsgemäßen Polymere zeigen dabei eine gegenüber der -OH oder -COOH Endgruppe wesentlich erhöhte Vernetzungsgeschwindgkeit mit den genannten Vernetzungsmitteln.

Darüberhinaus eignet sich das erfindungsgemäße Verfahren auch zur Herstellung von Oligomeren, die zur Herstellung von Kunststoffen wie Polyamiden, Polyestern, Polycarbonaten oder Polyurethan(harnstoff)en dienen.

### Beispiele

### Beispiel 1

a) 400 g Isobutylen-Isopren-Kautschuk mit einem Isoprengehalt von 1,6 Mol-% und einer Mooney-Viskosität von 51 (ML 1+8, 125°C) (Polysar Butyl 301, Handelsprodukt Polysar) werden in 1,5 l Petrolether gelöst. In die Lösung wird unter Rühren bei 0 bis 10°C ein mit Ozon angereicherter Sauerstoffstrom (50 l/h, Ozonmenge ca. 4 g/h) eingeleitet, bis die berechnete Menge Ozon (2,75 g) aufgenommen ist. Nach Spülen mit Stickstoff wird eine Lösung von 5 g Natriumborhydrid in 20 ml 50 %igem Ethanol unter starkem Rühren zugegeben und solange gerührt, bis mit Iod-Stärke-Papier keine Peroxide mehr nachweisbar sind. Die wäßrige Phase wird abgetrennt und die organische Phase über Natriumsulfat getrocknet und das Lösemittel abdestilliert. Im IR-Spektrum des zurückbeleibenden Öls erscheint eine starke Bande bei 1720 cm⁻¹.
b) Das Öl wird in 500 mi Tetrahydrofuren gelöst und unter Zusatz von 20 g Raney-Nickel bei 200°C und 150 bar Wasserstoffdruck hydriert, bis die IR-Bande bei 1720 cm⁻¹ verschwunden ist. Nach Filtration wird das Lösemittel abdestilliert. Das entstandene OH-terminierte Polymer hat ein Molekulargewicht Mₙ von 4 320 g/Mol (durch GPC-Bestimmung) und weist eine OH-Zahl (durch Titration nach der Acetylierungsmethode bestimmt) von 25 bis 26 auf.

### Beispiel 2

Das Öl aus Beispiel 1a) wird in 500 ml Tetrahydrofuran gelöst und unter Zusatz von 20 g Raney-Nickel und 200 g Ammoniak bei 150°C und 150 bar Wasserstoffdruck hydriert, bis die IR-Bande bei 1720 cm⁻¹ verschwunden ist. Nach Filatration wird das Lösemittel abdestilliert. Das entstandene NH₂-terminierte Polymer hat ein Molekulargewicht Mₙ von 4 450 g/Mol (durch GPC-Bestimmung) und weist eine NH-Zahl (durch Titration mit HCl bestimmt) von 25 bis 26 auf.

### Beispiel 3

a) Beispiel 1a) wird mit 400 g eines Isobutylen-Isoprenkautschuks mit einem Isoprengehalt von 2,2 Mol-% und einer Mooney-Viskosität von 47 (ML 1+8, 125°C) (Polysar Butyl 402, Handelsprodukt Polysar) wiederholt. Als Lösungsmittel wird Tetrachlorkohlenstoff verwendet. Die berechnete Ozonmenge beträgt 3,75 g. Anstelle der Natriumborhydrierlösung werden 20 ml einer 45 %igen wäßrigen Formaldehydlösung zugegeben. Die so behandelte Lösung ist nach Trocknen peroxidfrei.
b) Das entstandene Öl wird wie in Beispiel 1b) behandelt. Man erhält ein OH-terminiertes flüssiges Polymer mit einem Molekulargewicht Mₙ von 3 150 g/Mol (durch GPC-bestimmung). Es weist eine OH-Zahl von 34,5 bis 35,5 auf.

### Beispiel 4

Das Öl aus Beispiel 3a) wird wie in Beispiel 2 behandelt. Man erhält ein NH₂-terminiertes flüssiges Polymer mit einem Molekulargewicht Mₙ von 3 540 g/Mol (durch GPC-Bestimmung). Es weist eine NH-Zahl (durch Titration mit HCl bestimmt) von 31,5 bis 32,5 auf.

### Beispiel 5

Beispiel 4 wird wiederholt, dabei werden jedoch an Stelle von Ammoniak 200 g Methylamin eingesetzt. Das erhaltene NHCH₃-terminierte Polymer hat eine NH-Zahl von 29.

### Beispiel 6 (Vergleichsbeispiel, nicht erfindungsgemäß)

Das Öl aus Beispiel 1a) wird in 3 l absolutem Tetrahydrofuran unter Stickstoffatmosphäre gelöst. Dann wird langsam unter Ausschluß von Feuchtigkeit die berechnete Menge (1,14 g) Lithiumaluminiumhydrid zugegeben und kräftig gerührt. Nach einigen Minuten beginnt die Viskosität der Lösung zu steigen bis sie sich nach ca 20 Minuten verfestigt. Erst nach Zugabe von weiteren 2 l Tetrahydrofuran und 10 g Lithiumaluminiumhydrid bildet sich wieder eine rührbare Lösung. Der Überschuß von Lithiumaluminiumhyrid wird unter Stickstoffatmosphäre unter heftiger Wasserstoffentwicklung durch Isopropanol und Wasser hydrolysiert und das Lösemittel abdestilliert. Der Rückstand wird in 2 l Petrolether aufgenommen und mit Wasser salzfrei gewaschen, wobei sich nur langsam trennende Emulsione entstehen. Die organische Phase wird mit Natriumsulfat getrocknet und eingedampft. Das so hergestellte OH-terminierte Polymer hat eine OH-Zahl von 21.

### Beispiel 7

Das NH₂-terminierte Polymer aus Beispiel 4 wird in 1 l Chlorbenzol gelöst und bei 0°C in eine Lösung von 100 g Phosgen in 500 ml Chlorbenzol getropft. Dann wird die Temperatur langsam bis 80°C gesteigert und das Lösemittel anschließend unter reduziertem Drück abdestilliert. Nach Trocknen im Hochvakuum wird der NCO-Gehalt des erhaltenen NCO-terminierten Polymere titrimetrisch zu 2,1% bestimmt.

### Beispiel 8

Das NH₂-terminierte Polymer aus Beispiel 4 wird in 1 l Cyclohexan gelöst und unter Zusatz von 50 ml 2-Butanon und 1 g saurem Ionenaustauscherharz am Wasserabscheider bis zu Ende der Kondensation erhitzt. Das IR-Spektrum des nach Eindampfen und Trockenn erhaltenen Imin-terminierten Polymers zeigt bei 1600 cm⁻¹ eine charakteristische Bande.

### Beispiel 9

Beispiel 3a) wird wiederholt. Das nach Eindampfen erhaltene Öl wird in 500 ml Cyclohexan aufgenommen, mit 5 g frisch hergestelltem Cobaltpolysulfid (Zusammensetzung ca. CoS₃) und 10 g Schwefel versetzt und bei 200 bar und 150°C mit Wasserstoff hydriert. Die Lösung wird filtriert, mit Wasser sorgfältig ausgewaschen, getrocknet und das Lösemittel und restlicher Schwefelwasserstoff im Vakkum entfernt. Der Schwefelgehalt beträgt nach der Elementaranalyse 1,9 Gew.-%.

### Beispiel 10

Das NH₂-terminierte Polymer aus Beispiel 4 wird in einem Haake-Kneter mit Ruß N550 gemäß folgender Tabelle vermischt und die Mooney-Viskositäten (ML 4, 125°C) bestimmt:

| Beispiel | Polymer | Teile | Teile Ruß | Mooney |
|---|---|---|---|---|
| 10a | Bsp.4 | 100 | 30 | 18,3 |
| 10b | Bsp.4 | 100 | 40 | 23,5 |
| 10c | Bsp.4 | 100 | 50 | 39,4 |
| 10d (Vergleich) | Polysar | | | |
| | Butyl 402 | 100 | 40 | 58,5 |

### Beispiel 11

Im folgenden Beispiel wird die erhöhte Reäktivität der erfindungsgemäßen Polymere gegenüber Vernetzungsmitteln deutlich. Eine Lösung des jeweiligen Polymeren (10 g in 50 mi THF) wird mit 1 g Phenylisocyanat versetzt und der Gehalt an NCO-Gruppen in der Lösung über die Zeit titrimetrisch verfolgt:
a) OH-Polymer aus Beispiel 3b) (Vergleich)

| Zeit | NCO-Gehalt |
|---|---|
| 1 min | 8,2 mmol |
| 10 min | 7,0 mmol |
| 30 min | 4,7 mmol |
| 60 min | 2,9 mmol |

b) NH₂-Polymer aus Beispiel 4 (erfindungsgemäß)

| Zeit | NCO-Gehalt |
|---|---|
| 1 min | 6,3 mmol |
| 10 min | 3,2 mmol |
| 30 min | 2,2 mmol |
| 60 min | 2,2 mmol |

## Patentansprüche

1. Verfahren zur Herstellung von flüssigen, gesättigten Polymeren der Struktur 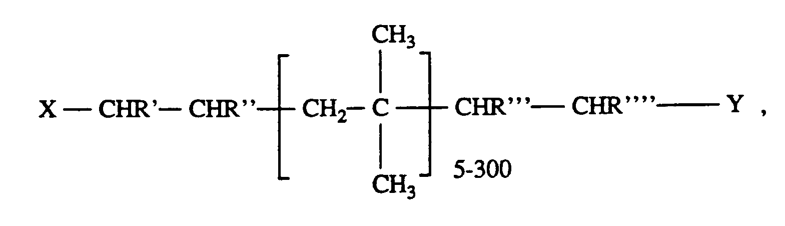 worin
R', R'', R''' und R'''' für Wasserstoff oder eine C₁-C₃-Alkylgruppe stehen und mindestens zwei der Reste Wasserstoff bedeuten, mit einem Molekulargewicht Mₙ von 300 bis 10 000 und im wesentlichen an den Enden der Polymerkette befindlichen Gruppen X und Y der Bedeutung OH, SH, NR¹R², N=C=O oder N=C(R²)₂, wobei X=Y gilt und die Anzahl der Gruppen X+Y pro Polymer 1,8 bis 2,5 beträgt,
durch Ozonolyse eines hochmolekularen, 0,5 bis 15 Mol-% eines Dienmonomeren enthaltenden Isobutylen-Dien-Copolymeren in Lösung, dadurch gekennzeichnet, daß die nach der Ozonbehandlung entstehenden Produkte durch Zugabe von Peroxidzersetzern stabilisiert werden und durch Reduktion mittels Wasserstoff in Anwesenheit von Hydrierkatalysatoren unter Drücken von 10 bis 300 bar und Temperaturen von 20 bis 300°C gegebenenfalls in Gegenwart von Schwefel oder Aminen der Struktur NHR¹R² gespalten werden und, sofern es sich bei dem Amin um Ammoniak handelt, die entstandenen NH₂-Gruppen gegebenenfalls anschließend durch Umsetzung mit Phosgen oder mit Ketonen oder Aldehyden in die Gruppen N=C=O oder N=C(R²)₂ umgewandelt werden,
wobei
R¹ für Wasserstoff oder einen gegebenenfalls substituierten aliphatischen, cycloaliphatischen oder aromatischen, gegebenenfalls Hydroxyl- oder Amingrupen tragenden C₁- bis C₁₆-Kohlenwasserstoffrest und
R² für Wasserstoff oder einen gegebenenfalls substituierten aliphatischen, cycloaliphatischen oder aromatischen C₁ bis C₁₆-Kohlenwasserstoffrest stehen.

2. Verfahren nach Anspruch 1, dadurch gekennzeichnet, daß hochmolekulare, 0,5 bis 15 Mol-% Isopren enthaltende Isobutylen-Isopren-Copolymere zur Ozonolyse eingesetzt werden.

3. Verfahren nach Anspruch 1, dadurch gekennzeichnet, daß zur Stabilisierung eine wäßrig-alkoholische Natriumhydridlösung oder eine wäßrige Formaldehydlösung eingesetzt wird.

4. Verfahren nach Anspruch 1, dadurch gekennzeichnet, daß in Abwesenheit von Schwefel Raney-Nickel, Kupferchromit oder Platinkatalysatoren und bei Anwesenheit von Schwefel Sulfide oder Polysulfide der Nebengruppenmetalle als Hydrierkatalysatoren eingesetzt werden.

5. Flüssige, gesättigte Polymere der Struktur 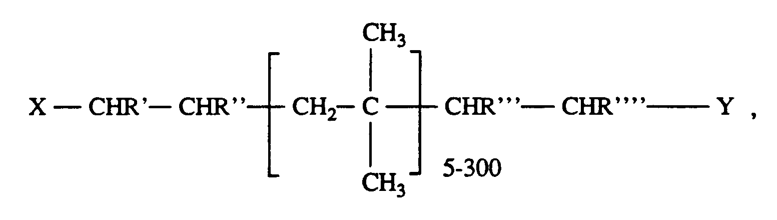 worin
R', R'', R''' und R'''' für Wasserstoff oder eine C₁-C₃-Alkylgruppe stehen und mindestens zwei der Reste Wasserstoff bedeuten, mit einem Molekulargewicht Mₙ von 300 bis 10 000 und im wesentlichen an den Enden der Polymerkette befindlichen Gruppen X und Y der Bedeutung SH, NR¹R², N=C=O oder -N=C(R²)₂, wobei X=Y gilt und die Anzahl der Gruppen X+Y pro Mol Polymer 1,8 bis 2,5 beträgt,
und
R¹ für Wasserstoff oder einen gegebenenfalls substituierten aliphatischen, cycloaliphatischen oder aromatischen, gegebenenfalls Hydroxyl- oder Amingruppen tragenden C₁- bis C₁₆-Kohlenwasserstoffrest und
R² für Wasserstoff oder einen gegebenenfalls substituierten aliphatischen, cycloaliphatischen oder aromatischen C₁- bis C₁₆-Kohlenwasserstoffrest stehen.

6. Polymere nach Anspruch 5, dadurch gekennzeichnet, daß sie 1,8 bis 2,2 Mol Gruppen der Struktur -SH, -NHR¹ oder -N=C=O pro Mol Polymer enthalten, die sich im wesentlichen an den Enden der Polymerkette befinden.

7. Verwendung der nach Anspruch 1 erhaltenen Polymere zur Herstellung von gefüllten, mit polyfunktionellen Vernetzungsmitteln über die reaktiven Endgruppen vulkanisierbaren Kautschukmischungen mit niedriger Mooney-Viskosität.

## Claims

1. A process for the production of liquid, saturated polymers corresponding to the following formula 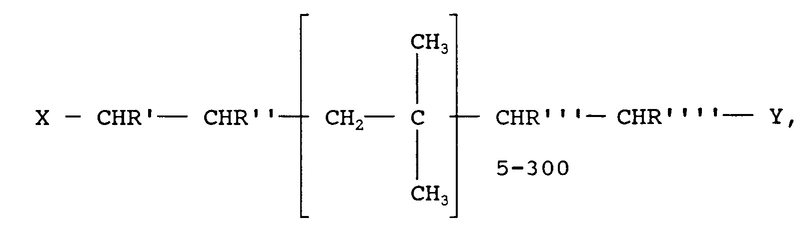 wherein
R', R'', R''' and R'''' represent hydrogen or a C₁₋₃ alkyl group and at least two of the substituents are hydrogen,
which have a molecular weight Mₙ of 300 to 10,000 and which bear groups X and Y - essentially positioned at the ends of the polymer chain - with the meanings OH, SH, NR¹R², N=C=O or N=C(R²)₂, X being the same as Y and the number of groups X + Y per polymer being from 1.8 to 2.5,
by solution ozonolysis of a high molecular weight isobutylene/diene copolymer containing 0.5 to 15 mol-% of a diene monomer, characterized in that the products formed after the ozone treatment are stabilized by addition of peroxide decomposers and are decomposed by reduction with hydrogen in the presence of hydrogenation catalysts under pressures of 10 to 300 bar and at temperatures of 20 to 300°C, optionally in the presence of sulfur or amines having the structure NHR¹R² and, where the amine is ammonia, the NH₂ groups formed are optionally converted into the groups N=C=O or N=C(R²)₂ by reaction with phosgene or with ketones or aldehydes,
R¹ representing hydrogen or an optionally substituted aliphatic, cycloaliphatic or aromatic C₁₋₁₆ hydrocarbon radical optionally bearing hydroxyl or amino groups and
R² representing hydrogen or an optionally substituted aliphatic, cycloaliphatic or aromatic C₁₋₁₆ hydrocarbon radical.

2. A process as claimed in claim 1, characterized in that high molecular weight isobutylene/isoprene copolymers containing 0.5 to 15 mol-% isoprene are used for the ozonolysis.

3. A process as claimed in claim 1, characterized in that an aqueous alcoholic sodium hydride solution or an aqueous formaldehyde solution is used for stabilization.

4. A process as claimed in claim 1, characterized in that Raney nickel, copper chromite or platinum catalysts are used as the hydrogenation catalysts in the absence of sulfur while sulfides or polysulfides of the secondary group metals are used as the hydrogenation catalysts in the presence of sulfur.

5. Liquid, saturated polymers corresponding to the following formula 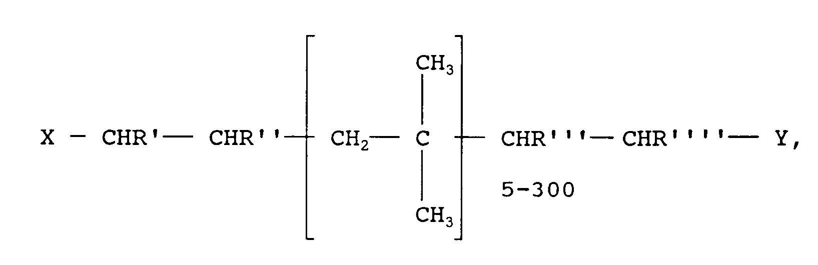 wherein
R', R'', R''' and R'''' represent hydrogen or a C₁₋₃ alkyl group and at least two of the substituents are hydrogen,
which have a molecular weight Mₙ of 300 to 10,000 and which bear groups X and Y - essentially positioned at the ends of the polymer chain - with the meanings OH, SH, NR¹R², N=C=O or -N=C(R²)₂, X being the same as Y and the number of groups X + Y per polymer being from 1.8 to 2.5,
and
R¹ represents hydrogen or an optionally substituted aliphatic, cycloaliphatic or aromatic C₁₋₁₆ hydrocarbon radical optionally bearing hydroxyl or amino groups and
R² represents hydrogen or an optionally substituted aliphatic, cycloaliphatic or aromatic C₁₋₁₆ hydrocarbon radical.

6. Polymers as claimed in claim 5, characterized in that they contain 1.8 to 2.2 mol per mol polymer of groups -SH, -NHR¹ or -N=C=O which are essentially positioned at the ends of the polymer chain.

7. The use of the polymers claimed in claim 1 for the production of filled rubber mixtures of low Mooney viscosity which can be vulcanized through their reactive terminal groups with polyfunctional crosslinking agents.

## Revendications

1. Procédé pour préparer des polymères saturés liquides de structure : 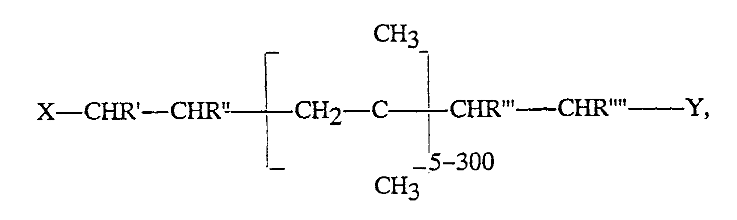 dans laquelle
R', R'', R''' et R'''' représentent chacun l'hydrogène ou un groupe alkyle en C₁ à C₃, au moins deux de ces symboles représentant l'hydrogène, à un poids moléculaire Mₙ de 300 à 10000, les groupes X et Y, se trouvant essentiellement aux extrémités de la chaîne polymère, consistant en groupes OH, SH, NR¹R², N=C=O ou N=C(R²)₂, avec X=Y, et le nombre des groupes X+Y étant de 1,8 à 2,5 par polymère,
par ozonolyse d'un copolymère isobutylène-diène à haut poids moléculaire, contenant 0,5 à 15 mol % d'un monomère diénique, en solution, caractérisé en ce que l'on stabilise les produits obtenus après traitement à l'ozone par addition de destructeurs de peroxydes et on les scinde par réduction à l'aide d'hydrogène en présence de catalyseurs d'hydrogénation sous des pressions de 10 à 300 bar et à des températures de 20 à 300°C, éventuellement en présence de soufre ou d'amines de structure NHR¹R² puis le cas échéant, lorsque l'amine utilisée est l'ammoniac, on convertit les groupes NH₂ formés, par réaction avec le phosgène ou des cétones ou aldéhydes, en les groupes N=C=O ou N=C(R²)₂,
R¹ représentant l'hydrogène ou un radical hydrocarboné aliphatique, cycloaliphatique ou aromatique en C₁ à C₁₆, éventuellement substitué et portant éventuellement des groupes hydroxy ou amino, et
R² représentant l'hydrogène ou un radical hydrocarboné aliphatique, cycloaliphatique ou aromatique en C₁ à C₁₆, éventuellement substitué.

2. Procédé selon la revendication 1, caractérisé en ce que l'on soumet à ozonolyse des copolymères isobutylène-isoprène à haut poids moléculaire contenant de 0,5 à 15 mol % d'isoprène.

3. Procédé selon la revendication 1, caractérisé en ce que, pour la stabilisation, on utilise une solution hydro-alcoolique d'hydrure de sodium ou une solution aqueuse de formaldéhyde.

4. Procédé selon la revendication 1, caractérisé en ce que, en l'absence de soufre, on utilise en tant que catalyseurs d'hydrogénation le nickel de Raney, le chromite de cuivre ou des catalyseurs au platine, et en présence de souffle, on utilise des sulfures ou polysulfures des métaux des sous-groupes de la Classification Périodique.

5. Polymères saturés liquides de structure : 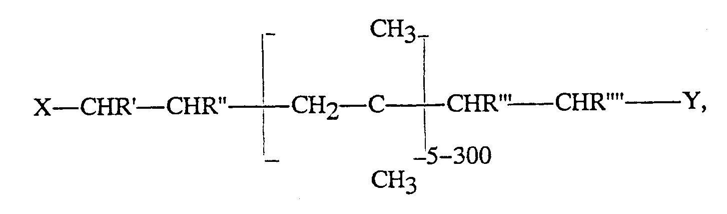 dans laquelle
R', R'', R''' et R'''' représentent chacun l'hydrogène ou un groupe alkyle en C₁ à C₃, deux au moins de ces symboles représentant l'hydrogène, à un poids moléculaire Mₙ de 300 à 10 000, les groupes X et Y, se trouvant essentiellement aux extrémités de la chaîne polymère, consistant en groupes SH, NR¹R², N=C=O ou -N=C(R²)₂, avec X=Y, et le nombre des groupes X+Y étant de 1,8 à 2,5 par mole du polymère,
et
R¹ représente l'hydrogène ou un radical hydrocarboné aliphatique, cycloaliphatique ou aromatique en C₁ à C₁₆, éventuellement substitué et portant éventuellement des groupes hydroxy ou amino, et
R² représente l'hydrogène ou un radical hydrocarboné aliphatique, cycloaliphatique ou aromatique en C₁ à C₁₆, éventuellement substitué.

6. Polymères selon la revendication 5, caractérisé en ce qu'ils contiennent de 1,8 à 2,2 mol de groupes de structure -SH, NHR¹ ou -N=C=O par mole du polymère, ces groupes se trouvant essentiellement aux extrémités de la chaîne polymère.

7. Utilisation des polymères obtenus selon la revendication 1 pour la préparation de mélanges de caoutchoucs chargés, à basse viscosité Mooney, et vulcanisables à l'aide d'agents réticulants polyfonctionnels par les groupes terminaux réactifs.
